# EUROPÄISCHE PATENTANMELDUNG

(11) **EP 0 837 552 A2**
(43) Veröffentlichungstag der Anmeldung: **22.04.1998**
(21) Anmeldenummer: 97117520.3
(22) Anmeldetag: 09.10.1997
(51) Int. Cl.: H02P 3/04

(54) **Notbetriebssteuerung für ein Hebezeug**

(30) Priorität: 21.10.1996 DE 19643408
(71) Anmelder: R. Stahl Fördertechnik GmbH, D-74653 Künzelsau (DE)
(72) Erfinder: Kugler, Dieter, 74163 Öhringen - Cappel (DE)
(74) Vertreter: Patentanwälte Rüger, Barthelt & Abel

(57) **Zusammenfassung**

Eine Steuerungsanordnung (9) für den Motor (8) eines Hebezeugs basiert auf einem Mikroprozessor (19). Dieser Mikroprozessor (19) steuert die Leistungselemente (45.. 48), die die Stromzufuhr zu dem Motor (8) des Hebezeugs beeinflussen. Damit bei einem Versagen des Mikroprozessors (19) die Last zumindest abgesenkt werden kann, ist eine Hilfssteuerschalteinrichtung (54) vorhanden. Diese Hilfssteuerschalteinrichtung (54) wird durch den funktionsfähigen Mikroprozessor (19) deaktiviert und ist bei funktionslosem Mikroprozessor (19) aktiv. Im aktiven Zustand ist wenigstens eine Signalleitung (58) unter Umgehung des Mikroprozessors (19) unmittelbar mit jenem Leistungselement (47) gekoppelt, das eingeschaltet wird, um den Motor (8) im Sinne des Absenkens in Gang zu setzen.

## Beschreibung

Wie in allen übrigen technischen Bereichen so steigen auch die Anforderungen an die Leistungsmerkmale von Hebezeugen. Insbesondere gehen die Bestrebungen dahin, ohne Verlust an Sicherheit das Material optimal auszunutzen. Ferner erhöhen sich die Anforderungen an die Flexibilität bzw. Steuerungsmöglichkeit.

Derart hohe und komplexe Anforderungen lassen sich im allgemeinen nur dann mit vertretbarem Aufwand erfüllen, wenn Mikroprozessoren zu Hilfe genommen werden. In diesen Mikroprozessoren ist die gesamte Intelligenz zusammengefaßt, die benötigt wird, um die komplexen Leistungsanforderungen zu erfüllen.

Damit bietet es sich an, den Mikroprozessor auch zur eigentlichen Steuerung des Motorstroms für den Elektromotor des Hebezeugs einzusetzen, und zwar nicht nur dann, wenn das Hebezeug mit varibaler Hubgeschwindigkeit arbeiten soll.

Obwohl Mikroprozessoren heutzutage eine extrem hohe Zuverlässigkeit erreicht haben, wie dies die große Anzahl von Mikroprozessoren zeigt, besteht dennoch immer noch die Gefahr eines Ausfalls. Ein solcher, wenn auch extrem seltener Ausfall darf jedoch auf keinen Fall zu gefährlichen Situationen führen. Gefährliche Situationen könnten entstehen, wenn der Mikroprozessor versagt, während eine Last am Haken des Hebezeugs hängt.

Ausgehend hiervon ist es Aufgabe der Erfindung, eine Steuerungsanordnung für Hebezeuge zu schaffen, mit der es möglich ist, auch bei ausgefallendem Mikroprozessor eine Last zumindest abzusenken.

Diese Aufgabe wird erfindungsgemäß durch eine Steuerungsanordnung mit den Merkmalen des Anspruches 1 gelöst.

Im Regelbetrieb bekommt der Mikroprozessor seine Steuerkommandos aus einer Eingabeeinrichtung. Diese Eingabeeinrichtung ist bei üblichen, von Hand gefahrenen Hebezeugen, beispielsweise ein Handschalter oder Hängeschalter, wie er im Bereich der Hebezeuge anzutreffen ist. Bei automatisch arbeitenden Anlagen kann die Eingabeeinrichtung aber auch ein fremder Prozessor sein, der seine Aufträge an die betreffende Schaltungsanordnung zur Steuerung des jeweiligen Hebezeugs abgibt.

Der Mikroprozessor der betreffenden Steuerungsanordnung steuert aus Sicherheitsgründen den Strom des zugehörigen Elektromotors des Hebezeugs über Motorschütze oder Motorrelais, wozu der Mikroprozessor an seinem Ausgang entsprechende Steuersignale abgibt.

Damit beim Ausfall des Mikroprozessors ein Absenken der Last möglich ist, ist eine zusätzliche Hilfssteuerschalteinrichtung vorgesehen, über die ein Eingangsanschluß des Mikroprozessors mit wenigstens einem Ausgangsanschluß verbindbar ist, um die Befehle für den betreffenden Motorschütz unter Umgehung des Mikroprozessors übermitteln zu können.

Die Eingabeeinrichtung kann dazu eingerichtet sein, wenigstens zwei weitere Betriebszustände zu steuern, beispielsweise "schnell Heben" und "schnell Senken". Sie kann aber auch dazu eingerichtet sein, kontinuierliche Beschleunigungs- oder Verzögerungsvorgänge beim Heben und Senken des Hebezeugs zu steuern.

Wie bereits erwähnt, kann die Eingabeeinrichtung manuell betätigt sein, wobei sie dann vorzugsweise elektronische oder elektromechanische Schalteinrichtungen enthält. Dabei ist jede elektromechanische oder elektronische Schalteinrichtung ein Betriebszustand mit Ausnahme des Betriebszustands "Stillstand" zugeordnet. Daß der Betriebszustand "Stillstand" nicht einer speziellen elektronischen Schalteinrichtung zugeordnet ist, ergibt sich einfach aus dem Umstand, daß dieser Zustand erreicht wird, wenn sämtliche Motorschütze ausgeschaltet sind.

Anstelle von manuell betätigten elektronischen oder elektromechanischen Schalteinrichtungen können entsprechende Signale auch von anderen elektronischen Steuerungen kommen, die hierarchiemäßig übergeordnet sind.

Wenn das Hebezeug lediglich mit festen Arbeitsgeschwindigkeiten gefahren wird, ist jedem aktiven Betriebszustand ein eigener Motorschütz bzw. ein eigenes Schützsteuerrelais zugeordnet. Wenn jedoch das Hebezeug mit variabler Hebe- bzw. Senkgeschwindigkeit arbeitet, ist möglicherweise lediglich ein einziger Motorschütz vorgesehen ist, über den der Elektromotor des Hebezeugs beispielsweise mit einem Frequenzumrichter verbunden ist. Mit Hilfe des Frequenzumrichters werden dann sowohl sämtliche Drehzahlen realisiert als auch die betreffende Drehrichtung, indem die Phasenlage der einzelnen Phasen des Drehstromnetzes entsprechend verändert wird.

Die Hilfssteuerschalteinrichtung bildet in jedem Falle Mittel, die beim Ausfall des Mikroprozessors und/oder des Frequenzumrichters einen Notbetrieb zum Absenken ermöglichen. Dazu ist bei einer Eingabeeinrichtung in Gestalt eines Engeschalters derjenige Schalter, der dem Absenken der Last mit der Normalgeschwindigkeit zugeordnet ist, mit der Hilfssteuerschalteinrichtung verbunden, deren anderer Anschluß an dem zum Absenken betätigten Motorschütz bzw. Motorschützsteuerrelais liegt. Sinngemäß die gleiche Anordnung ist getroffen, wenn die Eingabeeinrichtung lediglich eine von einem anderen Prozessor kommendes Signalleitungsbündel ist. Hierbei ist die dem Absenken zugeordnete Leitung mit der Hilfssteuerschalteinrichtung verbunden.

Die Hilfssteuerschalteinrichtung selbst kann entweder automatisch durch den betreffenden Mikroprozessor gesteuert sein oder manuell. Die automatische Steuerung bietet dabei gewisse Vorteile, weil sie seitens der Handhabung einfacher ist.

Die automatische Betätigung erfolgt durch den Mikroprozessor selbst und ist so ausgebildet, daß bei abgeschaltetem Mikroprozessor lediglich die Notsteuerung im Sinne des Absenkens möglich ist. Sobald der Mikroprozessor aktiviert wird, wird eine Prüfroutine durchlaufen, die die Funktionsfähigkeit aller Elemente überprüft. Nach erfolgreichem Abschließen der Prüfroutine wird die Hilfssteuerschalteinrichtung deaktiviert, womit ein voller Betrieb über den Mikroprozessor möglich ist. Im Sinne einer weiteren Verbesserung der Gesamtfunktionssicherheit kann der Mikroprozessor eine ständig laufende Prüfschleife enthalten, die periodisch aktiviert werden muß, weil andernfalls der Verdacht auf eine Endlosschleife besteht, die auch wieder zum Umschalten in den Notbetrieb zwingt.

Scließlich ist es denkbar, die Schaltungsanordnung so zu modifizieren, daß beim Ausfall des Mikroprozessors oder einer Störung desselben nicht nur ein langsames Absenken möglich bleibt, sondern auch ein langsames Anheben, um gegebenenfalls die Last behelfsmäßig rangieren zu können.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 einen Seilzug in einer perspektivischen Darstellung, mit einer erfindungsgemäßen Steuerungsanordnung,
Fig. 2 ein Blockschaltbild der erfindungsgemäßen Steuerungsanordnung mit direktem Netzbetrieb des Motors des Seilzugs und
Fig. 3 eine erfindungsgemäße Steuerungsanordnung, die einen Notbetrieb bei einem über einen Frequenzumrichter betriebenen Elektromotor ermöglicht.

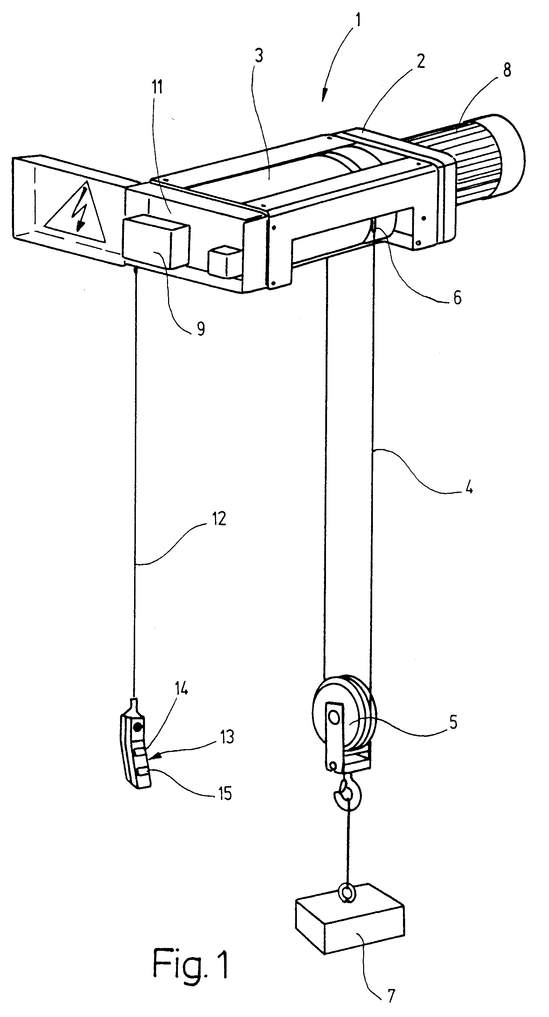

Fig. 1 zeigt in einer schematischen perspektivischen Darstellung einen Seilzug 1 mit einer in einem Rahmen 2 gelagerten Seiltrommel 3. Von der Seiltrommel 3 läuft ein Seil 4 ab, das zu einer Hakenflasche 5 und von dort zurück zu einer Verankerungsstelle 6 in dem Rahmen führt. An der Hakenflasche hängt eine Last 7.

Um die Seiltrommel 3 in Umdrehungen zu versetzen, ist an dem Rahmen 2 ein Elektromotor 8 angeflanscht, der vorzugsweise ein Drehstrommotor mit Kurzschlußläufer ist. Die Steuerung des Motors 8 geschieht über eine schematisch angedeutete Steuerungsanordnung 9, die in einem aufgeklappt gezeichneten Steuerkasten 11 untergebracht ist. An der Steuerungsanordnung 9 ist über ein Hängekabel 12 ein Handschalter oder Hängetaster 13 angeschlossen.

Der Hängetaster 13 weist zwei handbetätigte Drucktaster 14 und 15 auf, die dazu dienen, die Bewegung der Seiltrommel 3 zu steuern. Beispielsweise wird durch einfaches Niederdrücken des Drucktasters 14 bis zu einem Druckpunkt die Seiltrommel 3 im Sinne eines Anhebens der Last 7 mit einer langsamen Geschwindigkeit in Gang gesetzt. Wird der Drucktaster 14 über den Druckpunkt hinaus betätigt, erfolgt das Anheben der Last 7 mit einer erhöhten Geschwindigkeit.

In sinngemäßer Weise werden die Bewegungen zum Absenken mit Hilfe des Drucktasters 15 gesteuert.

Die Steuerungsanordnung 9 basiert auf einem Mikroprozessor 19, d.h. mit den Drucktastern 14 und 15 werden nicht unmittelbar Motorschütze gesteuert, sondern die von diesen Drucktastern 14, 15 kommenden Signale gelangen in einen Mikroprozessor, der seinerseits entsprechend Schalt- oder Motorschütze ansteuert. Damit bei einem Versagen des Mikroprozessors die Last 7 zumindest abgesetzt werden kann, ist die Steuerungsanordnung 9 mit einer Notsteuerung versehen.

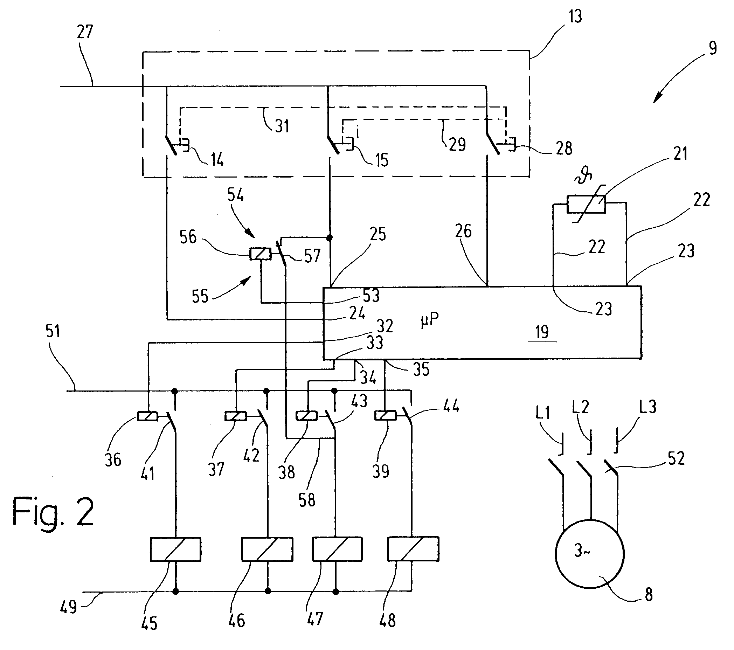

In Fig. 2 ist derjenige Teil der Steuerungsanordnung 9 stark schematisiert in einem Blockschaltbild gezeigt, der dazu dient, beim Versagen des Mikroprozessors die Last 7 absetzen zu können. Alle übrigen zum Verständnis der Erfindung nicht notwendigen Teile sind weggelassen.

Gemäß Fig. 2 enthält die Steuerungsanordndung 9 einen Mikroprozessor 19, der die gesamte Funktionsüberwachung des Hebezeugs 1 übernimmt. Als Beispiel für eine der Funktionen, die von dem Mikroprozessor 19 gesteuert oder überwacht werden, ist eine Wicklungstemperaturüberwachung gezeigt. Zu dieser gehört ein temperaturempfindlicher Widerstand 21, der in dem Motor 8 untergebracht ist und der über Anschlußleitungen 22 an Eingänge 23 des Mikroprozessors angeschlossen ist.

Weiterhin steuert, wie bereits erwähnt, der Mikroprozessor 19 die Bewegungen der Seiltrommel 3. Hierzu weist der Mikroprozessor 19 drei Eingänge 24, 25 und 26 auf. An dem Eingang 24 liegt der Drucktaster 14 mit seinem Arbeitskontakt, dessen anderer Anschluß mit einer nicht weiter gezeigten Spannungsversorgung über eine Leitung 27 verbunden ist. Der Drucktaster 15 zum Steuern der Senkbewegung liegt mit seinem Arbeitskontakt zwischen der Verbindungsleitung 27 und dem Eingang 25. Ferner ist ein Tastschalter 28 vorhanden, dessen Arbeitskontakt betätigt wird, sobald einer der beiden Drucktaster 14 und 15 über den Druckpunkt hinaus eingedrückt wird. Hierdurch soll der Motor 8 mit der höheren Geschwindigkeit in Gang gesetzt werden. Dieser zusätzliche, hinter dem Druckpunkt wirksame Tastschalter 28 ist mit seinem Arbeitskontakt einenends an die Verbindungsleitung 27 und anderenends an den Eingang 26 angeschlossen.

Die mechanische Kopplung zischen den beiden Drucktastern 14 und 15, die durch den Benutzer unmittelbar mechanisch zu betätigen sind und dem der hohen Geschwindigkeit zugeordneten Tastschalter 28 ist durch gestrichelte Linien 29 und 31 symbolisiert. Der Tastschalter 28 liegt sozusagen hinter dem Druckpunkt, wie dies bei Hängeschaltern zur steuerung von Hebezeugen üblich ist.

Mit Hilfe dieser insgesamt drei Schalter 14, 15, 28 sind insgesamt vier Betriebszustände des Hebezeugs 1 anzusteuern. Es handelt sich um die Betriebszustände "Heben", "Senken", "schnell Heben" und "schnell Senken". Ferner gibt es noch den Betriebszustand "Stillstand", in dem der Motor 8 angehalten ist und stillsteht. Dieser Betriebszustand wird erreicht, wenn keiner der beiden Drucktastenschalter 14 oder 15 betätigt ist. In diesem Zustand befindet sich gleichzeitig außerdem der Tastschalter 28 in der Ruhestellung.

Der Mikroprozessor 19 verfügt ferner über vier Ausgänge 32, 33, 34 und 35. Diese Ausgänge 32, 33, 34 und 35 sind mit Relais verbunden, deren Magnetwicklungen 36, 37, 38 und 39 gezeigt sind, von denen jede einen zugehörigen Arbeitskontakt 41...44 betätigt. Der andere Stromversorgungsanschluß für die Magnetwicklungen 36...39 ist der Übersichtlichkeit halber nicht gezeichnet.

Jeder der Arbeitskontakte 41...44 liegt in dem Steuerstromkreis von ingesamt vier Motor- oder Steuerschützen 45, 46, 47 und 48, deren Steuerwicklungen gemeinsam einenends an eine Stromversorgungsleitung 49 angeschlossen sind. Das andere Ende der Steuerwicklungen der Motorschütze 45...48 ist über den entsprechenden Arbeitskontakt 41...44 mit dem anderen Anschluß 51 der Stromversorgung verbunden.

Zu den Motorschützen 45...48 gehören eine Reihe von Arbeitskontakten 52, von denen lediglich drei gezeigt sind, um den Motor 8 mit Phasenleitern L1, L2 und L3 eines Drehstromnetzes zu verbinden.

Mit Hilfe eines weiteren Ausgangs 53 des Mikroprozessors 19 wird eine Hilfsschaltsteuereinrichtung 54 betätigt. Beim gezeigten Ausführungsbeispiel gehört zu der Hilfsschaltsteuereinrichtung 54 ein Steuerrelais 55, dessen Magnetwicklung 56 an den Ausgang 53 angeschaltet ist. Ferner gehört zu dem Relais 55 ein Ruhekontakt 57, der einenends an dem Eingang 25 des Mikroprozessors 19 und anderenends mit dem Steuerstromkreis des Motorschütz 47 verbunden ist. Der Arbeitskontakt 57 ist dazu über eine Leitung 58 an die Verbindungsstelle zwischen der Steuerwicklung 47 und dem Arbeitskontakt 43 angeschlossen.

Die insoweit gezeigte Steuerschaltungsanordnung 9 arbeitet wie folgt:

Nach dem Einschalten der Stromversorgung für den Mikroprozessor 19 wird dieser in bekannter Weise zurückgesetzt und durchläuft ein Initialisierungsprogramm. Das Initialisierungsprogramm kann beispielsweise Prüfroutinen enthalten, in denen überprüft wird, ob die einzelnen Steuer- und Meßfühler einwandfrei arbeiten. Sobald diese Prüfroutine abgelaufen ist und keinen Fehler feststellen werden konnten, wechselt der Mikroprozessor 19 in das normale Steuerprogramm über, in dem die Bewegung der Seiltrommel 3 über den Hängetaster 13 gesteuert wird.

Am Ende des genannten Prüfprogramms gibt der Mikroprozessor 19 an seinem Ausgang 53 ein Spannungssignal ab, das dazu führt, daß die Magnetwicklung 56 den Ruhekontakt 57 öffnet. Solange kein Fehler auftritt, den der Mikroprozessor 19 erkennt oder durch den der Mikroprozessor 19 betriebsunfähig wird, gibt der Mikroprozessor 19 dieses Signal ab, d.h. es bleibt von nun an bis auf weiteres der Arbeitskontakt 57 geöffnet. Dadurch ist die galvanische Verbindung zwischen dem Drucktastenschalter 15 und dem Stromkreis der Steuerwicklung 57 unterbrochen.

Wenn der Benutzer nun die Last 7 anheben will, betätigt er den Drucktaster 14, woraufhin dessen Arbeitskontakt schließt. Der Mikroprozessor 19 erhält dadurch an seinem Eingang 25 aus der Versorgungsleitung 27 Spannung, was als Signal zum Anheben der Last 7 interpretiert wird. Da die Betätigung des Drucktasters 14 nur bis zum Druckpunkt erfolgte, bleibt der Arbeitskontakt des Tastschalters 28 geöffnet. Dies entspricht der Funktion "langsam Heben". Um diese Funktion auszuführen, erzeugt der Mikroprozessor 19 an seinem Ausgang 32 ein Spannungssignal, das in die Magnetwicklung 36 gelangt, die daraufhin den Arbeitskontakt 41 schließt, wodurch die Steuerwicklung des Schütz 45 aus den Leitungen 51 und 49 Strom erhält und die entsprechenden Kontakte schließt, so daß der Motor 8 mit der niedrigen Drehzahl im Sinne des Anhebens der Last 7 in Umdrehungen versetzt wird.

Soll das Anheben mit hoher Geschwindigkeit erfolgen, wird der Drucktaster 14 über den Druckpunkt hinaus betätigt, wodurch zusätzlich der Arbeitskontakt des Tastschalters 28 ebenfalls geschlossen wird. Hierdurch bekommt der Mikroprozessor 19 Spannung an beiden Eingängen 25 und 26, was als Befehl zum schnellen Anheben interpretiert wird. Demzufolge wird das Spannungssignal an dem Ausgang 32 abgeschaltet und statt dessen ein Spannungssignal an dem Ausgang 33 eingeschaltet. Die Magnetwicklung 37 erhält Strom und schließt den Arbeitskontakt 42. Anstelle der Steuerwicklung für den Schütz 45 bekommt nun die Steuerwicklung für den Schütz 46 Strom aus der zugehörigen Versorgungsspannung und der Motor 8 wird so an das Netz angeschaltet, daß er mit der entsprechenden Drehrichtung und der hohen Drehzahl arbeitet.

Zum Stillsetzen genügt es, den Drucktaster 14 loszulassen, woraufhin sowohl dessen Arbeitskontakt als auch der Arbeitskontakt des Tastschalters 28 öffnet. Als Folge davon schaltet der Mikroprozessor 19 die Spannung an dem Ausgang 33 ab.

Zum Absenken der jetzt angehobenen Last 7 wird der Drucktaster 15 betätigt. Dabei entspricht dem Niederdrücken des Drucktasters 15 bis zum Druckpunkt dem Absenken mit der niedrigen Geschwindigkeit und das Betätigen über den Druckpunkt hinaus, also das zusätzliche Betätigen des Tastschalters 28, dem Absenken mit der hohen Geschwindigkeit. Zum Absenken mit der niedrigen Geschwindigkeit erhält, gesteuert durch den Mikroprozessor 19 und die Magnetwicklung 38, die Steuerwicklung des Schütz 47 Strom, während zum Absenken mit der hohen Geschwindigkeit die Steuerwicklung des Schütz 48 mit Strom beaufschlagt wird.

Sollte während des Betriebs der Mikroprozessor 19 einen Schaden erleiden, kann er die Ausgänge 32...35 nicht mehr steuern. Diese Ausgänge werden stromlos, womit auch die Motorschütze über den Mikroprozessor 19 nicht mehr ansteuerbar sind. Darüber hinaus verschwindet auch das Spannungssignal an dem Ausgang 53. Das Relais 55 fällt ab. Hierdurch schließt sich der Ruhekontakt 57. Dadurch kann die Steuerwicklung des Schütz 47 nun unmittelbar über den Drucktaster 15 mit Strom aus der Versorgungsleitung 27 versorgt werden, um die Last 7 abzusenken. Durch Betätigung des Drucktasters 15 kann ein Strom über den geschlossenen Ruhekontakt 57 unmittelbar zum heißen Ende der Steuerwicklung des Schütz 47 und von dort zu der Stromversorgungsleitung 49 fließen. Der Motorschütz 47 schaltet ein und setzt den Motor 8 im Sinne des Absenkens der Last mit der niedrigen Drehzahl in Gang.

Da lediglich der Tastenschalter 15 auf diese Weise beschaltet ist, ist nur ein Absenkbetrieb möglich.

Sollte es darüber hinaus gewünscht sein, notfalls auch das Anheben mit der niedrigen Geschwindigkeit bewerkstelligen zu können, kann eine weitere Hilfssteuerschalteinrichtung 54 vorgesehen sein, die den Eingang 24 mit dem heißen Ende der Steuerwicklung des Motorschütz 45 verbindet.

Die in Fig. 2 gezeigte Hilfssteuerschalteinrichtung 54 kann in ähnlicher Form auch bei Hebezeugen 1 verwendet werden, bei denen der Antriebsmotor 8 nicht direkt aus dem Netz gespeist wird, sondern über einen Frequenzumrichter.

Die Beschaltung des Mikroprozessors 19 an seinen Eingängen 24, 25 und 25 ist, wie oben, beschrieben.

Anstelle der insgesamt vier Ausgänge 32...35 sind zum Steuern der Drehzahl und Drehrichtung des Motors 8 lediglich zwei Ausgänge 32 und 33 vorgesehen, die an entsprechende Eingänge 61 und 62 eines Frequenzumrichters 63 angeschaltet sind. Dabei dient beispielsweise einer der beiden Eingänge 61, 62 zur Angabe der Drehrichtung, während der andere Eingang über ein sequentielles Binärsignal Angaben über die gewünschte Ausgangsfrequenz bekommt.

Der Frequenzumrichter ist in bekannter Weise an ein ein- oder mehrphasiges Stromnetz angeschlossen. Diese Verbindung ist der Übersichtlichkeit halber weggelassen. Die Versorgungsspannung für den Motor 8 wird über drei Ausgänge 64, 65 und 66 abgegeben. Diese Ausgänge liegen über Arbeitskontakte 67, 68 und 69 an den Wicklungen des Motors 8. Die Arbeitskontakte 67...69 sind die Kontakte eines Motorschütz 71, dessen Steuerwicklung gezeigt ist. Der Motorschütz 71 liegt mit seiner Steuerwicklung an dem Steuerausgang 53, an dem auch die Hilfssteuerschalteinrichtung 54 angeschlossen ist.

Mit den Wicklungen des Motors 8 sind drei weitere Arbeitskontakte 72, 73, 74 verbunden, deren andere Anschlüsse an den Phasenleitern L1, L2 und L3 des Stromnetzes liegen. Die Arbeitskontakte 72, 73 und 74 gehören zu einem Schütz 75, dessen Arbeitswicklung an den Ruhekontakt 57 angeschlossen ist.

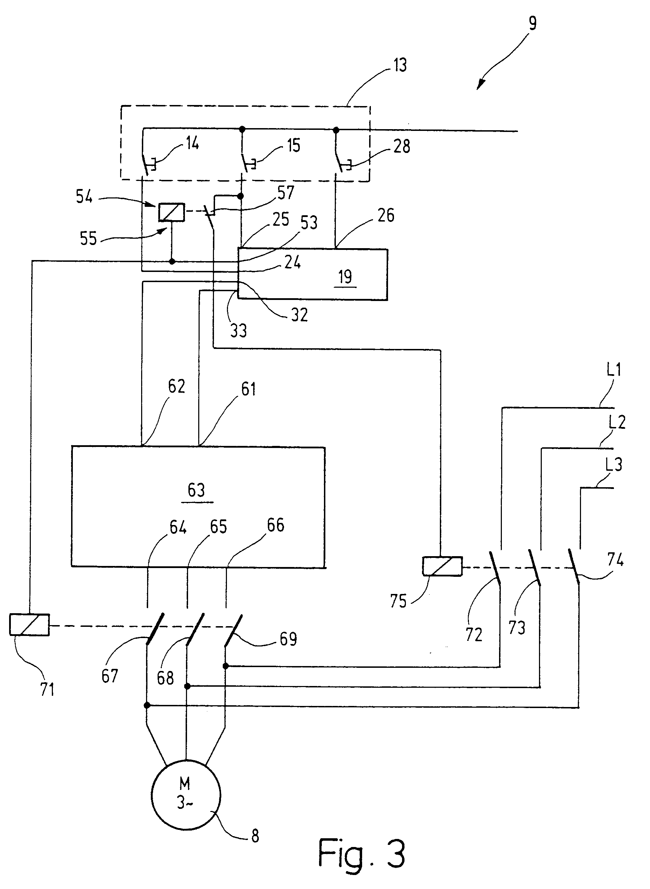

Die Anordnung nach Fig. 3 arbeitet wie folgt:

Nach dem Einschalten wird, wie beschrieben, der Mikroprozessor 19 initialisiert und erzeugt am Schluß der Initialisierungsphase ein Spannungssignal an seinem Ausgang 53. Durch dieses Spannungssignal 53 wird das Relais 55 und der Schütz 71 betätigt. Die Betätigung des Relais 55 führt zum öffnen des Ruhekontaktes 57, womit die galvanische Verbindung zwischen dem Drucktaster 15 und dem Schütz 75 unterbrochen ist. Gleichzeitig werden hierdurch die Arbeitskontakte 67...69 geschlossen, womit der Motor 8 an den Frequenzumrichter 63 angeschaltet ist. Durch Betätigen der Drucktaster 14 und 15, gegebenenfalls durch zusätzliches Betätigen des Tastschalters 28, kann die Frequenz des Frequenzumrichters 63 stufenlose von null bis zur Maximalfrequenz verstellt werden.

Falls im Betrieb ein Fehler auftritt, und der Frequenzumrichter 63 oder der Mikroprozessor 19 versagt, verschwindet die Steuerspannung an dem Ausgang 53. Als Folge fallen das Relais 55 sowie der Schütz 71 ab. Der Motor 7 wird elektrisch von dem Ausgang des Frequenzumrichters 63 getrennt. Wenn in diesem Zustand der Drucktaster 15, der für das Absenken zuständig ist, betätigt wird, gelangt die Spannung von der Versorgungsleitung 27 über den jetzt geschlossenen Ruhekontakt 57 zu der Steuerwicklung des Schütz 75, der anzieht und über seine Arbeitskontakte 72...74 den Motor 8 mit dem Netz verbindet. Dadurch wird der Motor 8 im Sinne des Absenkens der Last in Gang gesetzt. Das Absenken wird beendet, sobald der Drucktaster 15 losgelassen wird. Dadurch verschwindet die Spannung, die über die Leitung 27 eingespeist wird, von der Steuerwicklung des Schütz 75, der abfällt und den Motor 8 spannungslos schaltet.

Außerdem kann eine Zeituhr vorhanden sein, die die Betriebszeit im Notbetrieb erfaßt.

Eine Steuerungsanordnung für den Motor eines Hebezeugs basiert auf einem Mikroprozessor. Dieser Mikroprozessor steuert die Leistungselemente, die die Stromzufuhr zu dem Motor des Hebezeugs beeinflussen. Damit bei einem Versagen des Mikroprozessors die Last zumindest abgesenkt werden kann, ist eine Hilfssteuerschalteinrichtung vorhanden. Diese Hilfssteuerschalteinrichtung wird durch den funktionsfähigen Mikroprozessor deaktiviert und ist bei funktionslosem Mikroprozessor aktiv. Im aktiven Zustand ist wenigstens eine Signalleitung unter Umgehung des Mikroprozessors unmittelbar mit jenem Leistungselement gekoppelt, das eingeschaltet wird, um den Motor im Sinne des Absenkens in Gang zu setzen.

## Patentansprüche

1. Steuerungsanordnung (9) für ein einen Elektromotor (8) aufweisendes Hebezeug (1),
mit einer Eingabeeinrichtung (13), die dazu eingerichtet ist Signale abzugeben, die wenigstens drei Betriebszuständen wie "Heben", "Senken" und "Stillstand" entsprechen,
mit wenigstens einem Motorschütz oder -relais (45.. 48,71,75), über das eine Stromversorgung an den Elektromotor (8) anschließbar ist, um den Elektromotor (8) in Gang zu setzen, und
mit einem Mikroprozessor (19), der wenigstens zwei Eingangsanschlüsse (24,25,26), an die die Eingabeeinrichtung (13) angeschlossen ist, sowie wenigstens einen Ausgangsanschluß (32..35), zum Ausgeben von Steuersignalen für den Motorschütz oder das Motorrelais (45..48,71,75), aufweist und
mit einer Hilfssteuerschalteinrichtung (54), über die ein Eingangsanschluß (25) mit einem Leistungselement (45,75) zum Steurn des Elektromotors (8) oder einem Ausgang (34) des Mikroprozessors (19) verbindbar ist.

2. Steuerungsanordnung nach Anspruch 1, dadurch gekennzeichnet, daß die Eingabeeinrichtung (13) dazu eingerichtet ist Signale abzugeben, die wenigstens zwei weiteren Betriebszuständen wie "schnell Heben" und "schnell Senken" entsprechen.

3. Steuerungsanordnung nach Anspruch 1, dadurch gekennzeichnet, daß die Eingabeeinrichtung (13) elektromechanische oder elektronische Schalteinrichtungen (14,15,28) enthält.

4. Steuerungsanordnung nach Anspruch 1, dadurch gekennzeichnet, daß jede elektromechanische oder elektronische Schalteinrichtung (14,15,28) einem Betriebszustand mit Ausnahmen des Betriebszustands "Stillstand" zugeordnet ist.

5. Steuerungsanordnung nach Anspruch 1, dadurch gekennzeichnet, daß die Eingabeeinrichtung von einem Handsteuerschalter (13) gebildet ist.

6. Steuerungsanordnung nach Anspruch 1, dadurch gekennzeichnet, daß für jeden Betriebszustand mit Ausnahmen des Betriebszustands "Stillstand" ein eigener Motorschütz oder ein eigenes Motorrelais (45..48) vorgesehen ist.

7. Steuerungsanordnung nach Anspruch 1, dadurch gekennzeichnet, daß der Elektromotor (8) in allen Betriebszuständen mit Ausnahme des Betriebszustands "Stillstand" über einen Frequenzumrichter (63) mit Strom versorgt wird.

8. Steuerungsanordnung nach Anspruch 1, dadurch gekennzeichnet, daß der Mikroprozessor (19) für die Betriebszustände "Heben", "Senken" und "schnell" je einen Eingangsanschluß (24,25,26) aufweist.

9. Steuerungsanordnung nach Anspruch 1, dadurch gekennzeichnet, daß die Hilfssteuerschalteinrichtung (54) Mittel bildet, die beim Ausfall des Mikroprozessors (19) und/oder des Frequenzumrichters (63) einen Notbetrieb zumindest zum Absenken ermöglichen.

10. Steuerungsanordnung nach Anspruch 1, dadurch gekennzeichnet, daß die Hilfssteuerschalteinrichtung (54) zur manuellen Betätigung eingerichtet ist und eine manuelle Betätigungseinrichtung (13) aufweist.

11. Steuerungsanordnung nach Anspruch 1, dadurch gekennzeichnet, daß die Hilfssteuerschalteinrichtung (54) zur automatischen Betätigung eingerichtet ist und einen Steuereingang aufweist.

12. Steuerungsanordnung nach Anspruch 11, dadurch gekennzeichnet, daß der Mikroprozessor (19) einen Hilfsteuerausgang (53) aufweist, der mit dem Steuereingang der Hilfssteuerschalteinrichtung (54) verbunden ist.

13. Steuerungsanordnung nach Anspruch 1, dadurch gekennzeichnet, daß Hilfssteuerschalteinrichtung (54) wie ein Ruhekontakt eines elektromechanischen Relais wirkt.

14. Steuerungsanordnung nach Anspruch 1, dadurch gekennzeichnet, daß der Mikroprozessor (19) ein Programm enthält, das derart gestaltet ist, daß nach dem Einschalten der Versorgungsspannung für den Mikroprozessor (19) eine Prüfroutine durchlaufen wird und erst nach erfolgreichem Abschluß der Prüfroutine die Hilfsteuerschalteinrichtung (54) in einen Zustand gebracht wird, in der die Verbindung zwischen dem betreffenden Eingang des Mikroprozessors (19) mit dem betreffenden Ausgang des Mikroprozessors (19) oder dem betreffenden Leistungselement (47,75) unterbrochen ist.

15. Steuerungsanordnung nach Anspruch 1, dadurch gekennzeichnet, daß die Hilfssteuerschalteinrichtung (54) mit demjenigen Eingangsanschluß (25) des Mikroprozessors (19) verbunden ist, der dem Betriebszustand "Senken" entspricht.

16. Steuerungsanordnung nach Anspruch 1, dadurch gekennzeichnet, daß die Hilfssteuerschalteinrichtung (54) mit demjenigen Ausgangsanschluß (34) des Mikroprozessors (19) oder demjenigen Leistungselement (47,75) verbunden ist, der dem Betriebszustand "Senken" entspricht.

17. Steuerungsanordnung nach Anspruch 1, dadurch gekennzeichnet, daß die Hilfssteuerschalteinrichtung (54) zusätzlich mit wenigstens einem weiteren Schütz (71,75) oder Relais verbunden ist, der bzw. das derart beschaltet ist, daß in einem schaltzustand der Frequenzumrichter (63) überbrückt ist.

18. Steuerungsanordnung nach Anspruch 1, dadurch gekennzeichnet, daß die Hilfssteuerschalteinrichtung (54) eine elektromechanische Schalteinrichtung ist.

19. Steuerungsanordnung nach Anspruch 1, dadurch gekennzeichnet, daß Hilfssteuerschalteinrichtung (54) wenigstens einen Ruhekontakt aufweist.

20. Steuerungsanordnung nach Anspruch 1, dadurch gekennzeichnet, daß eine Zeituhr vorhanden, die die Betriebszeit im Notbetrieb erfaßt.
